# EUROPÄISCHE PATENTANMELDUNG

(11) **EP 2 884 401 A1**
(43) Veröffentlichungstag der Anmeldung: **17.06.2015**
(21) Anmeldenummer: 14002596.6
(22) Anmeldetag: 25.07.2014
(51) Int. Cl.: G06F 13/42, H04L 12/00

(54) **Verfahren und Einrichtung zur Datenkommunikation in Fahrzeugen, insbesondere in Kraftfahrzeugen**

(30) Priorität: 12.12.2013 DE 102013020550
(71) Anmelder: MAN Truck & Bus AG, 80995 München (DE)
(72) Erfinder: Harres, Ulrich, 90441 Nürnberg (DE); Kalass, Rainer, 91189 Rohr (DE)

(57) **Zusammenfassung**

Die Erfindung betrifft ein Verfahren zur Datenkommunikation in einem seriellen LIN-Bussystem, mit dem LIN-Informationen zwischen einem LIN-Master (M) und LIN-Slaves (S1 - S6) übertragen werden. Erfindungsgemäß werden LIN-Informationen zwischen dem LIN-Master (M) und identischen LIN-Slaves (S1 - S3) über jeweils eine separate Datenleitung (1 - 3), die zwischen jeweils einem der identischen LIN-Slaves (S1 - S3) und dem LIN-Master (M) verläuft, übertragen.

## Beschreibung

Die Erfindung betrifft ein Verfahren zur Datenkommunikation gemäß dem Oberbegriff des Patentanspruchs 1 sowie eine Einrichtung zur Datenkommunikation gemäß dem Patentanspruch 4.

Die Datenkommunikation kann in einem lokalen Datennetz, wie es beispielsweise in Kraftfahrzeugen vorhanden ist, mittels eines LIN-Datenbussystems erfolgen, wobei "LIN" die Abkürzung von "Local Interconnect Network" ist. In einem solchen LIN-Da-tenbussystem kann ein LIN-Master über einen LIN-Datenbus mit mehreren LIN-Slaves verbunden sein. Die LIN-Slaves können auch als Steuerkomponenten bezeichnet werden, die zu mehreren identischen und/oder unterschiedlichen zu steuernden Einrichtungen gehören. Als zu steuernde Einrichtungen können zum Beispiel Fensterheber, Sitzheizungen oder Generatoren mittels des LIN-Datenbussystems gesteuert werden.

Aus der DE 10 2006 051 222 B3 ist ein Verfahren zur Kommunikation auf einem LIN-Datenbus bekannt. Bei diesem bekannten Verfahren erfolgt eine Kommunikation zwischen LIN-Master und mehreren LIN-Slaves nach dem LIN-Protokoll. Die Datenübertragung zwischen dem LIN-Master und den LIN-Slaves wird seriell über den LIN-Datenbus vorgenommen, wobei der Datenstrom, der in mehrere Datenblöcke unterteilt ist, Identifikationsdaten, die auch als Kennungen bezeichnet werden können, für jeden der LIN-Slaves enthält. Anhand der individuellen Kennungen wird sichergestellt, dass die Steuerdaten und/oder Informationen, die über den LIN-Datenbus übermittelt werden, dem jeweils zugehörigen LIN-Slave zugeordnet werden können. Sind in dem LIN-Datenbussystem beispielsweise mehrere identische Generatoren angeschlossen, so müssen diese LIN-Slaves entsprechend individualisiert sein, damit sie die individuellen Kennungen im Datenstrom des LIN-Datenbussystems erkennen können.

Der Erfindung liegt die Aufgabe zugrunde, ein Verfahren anzugeben, mit dem in einem LIN-Datenbussystem zwei oder mehrere identische LIN-Slaves verwendet werden können, ohne dass diesen im Datenstrom des LIN-Datenbussystems individuelle Kennungen zugeordnet werden müssen.

Die Lösung dieser Aufgabe erhält man mit den im Anspruch 1 angegebenen Merkmalen. Besonders vorteilhafte Weiterbildungen des erfindungsgemäßen Verfahrens sind in den Unteransprüchen offenbart.

Gemäß Anspruch 1 werden LIN-Informationen zwischen dem LIN-Master und identischen LIN-Slaves über jeweils eine separate Datenleitung übertragen, die zwischen jeweils einem der identischen LIN-Slaves und dem LIN-Master verläuft. Die identischen LIN-Slaves erhalten somit ihre Kommunikationsdaten nicht über einen gemeinsamen LIN-Datenbus, sondern über separate und damit individuelle Datenleitungen. Durch die Übermittlung der LIN-Informationen über separaten Datenleitungen ist es nicht erforderlich, dass die derart angesteuerten identischen LIN-Slaves über zugeordnete Kennungen identifiziert werden müssen. Die identischen LIN-Slaves erfordern somit auch keine individualisierten Identifizierungseinrichtungen. Damit können beispielsweise mehrere Generatoren in einem Fahrzeug zusammen mit den zugeordneten LIN-Slaves völlig identisch ausgeführt sein. Dadurch ergibt sich ein Fertigungsvorteil, da an diesen identischen Geräten keine Maßnahmen zur Individualisierung oder für eine individuelle Kennung erforderlich sind. Eine zusätzliche fehleranfällige Beschaltung ist somit nicht erforderlich. Zudem kommt das System auch ohne Verkabelung und Anlernprozesse aus, so dass der Serviceaufwand entsprechend niedriger ist. Ein weiterer wesentlicher Vorteil liegt darin, dass die Buslast im gesamten Netzwerk gegenüber einer Kommunikation auf nur einer Datenleitung reduziert wird und somit eine häufigere bzw. höherfrequente Kommunikation mit angeschlossenen Slaves erfolgen kann.

Im LIN-Master wird vorzugsweise festgestellt, welche LIN-Information welchem der identischen LIN-Slaves über die jeweils zugehörige Datenleitung zu übermitteln ist. Im LIN-Master kann mittels eines Steuerprogramms und/oder eines Algorithmus vorgegeben werden, welche LIN-Informationen zu welchem identischen LIN-Slave zugeordnet sind. Daraufhin kann der LIN-Master die Übermittlung der jeweiligen LIN-Information über die zugehörige separate Datenleitung senden, die zu dem ausgewählten LIN-Slave gehört.

An dieser Stelle sei ausdrücklich erwähnt, dass selbstverständlich auch eine Kommunikation von den LIN-Slaves zum LIN-Master jederzeit möglich ist, das heißt jederzeit eine bidirektionale Kommunikation erfolgen bzw. vorgesehen sein kann. Beispielsweise kann ein LIN-Slave zum Beispiel eine Temperatur, um nur ein Beispiel zu nennen, zum LIN-Master übermitteln.

Es besteht auch die Möglichkeit, dass über die den identischen LIN-Slaves zugeordneten separaten Datenleitungen auch LIN-Informationen zu nichtidentischen LIN-Slaves übertragen werden.

Der Erfindung liegt die weitere Aufgabe zugrunde, eine Einrichtung zur Durchführung eines Verfahrens anzugeben, mit der eine Datenkommunikation in einem LIN-Datenbussystem zwischen einem LIN-Master und wenigstens zwei identischen LIN-Slaves auf möglichst einfache Weise erfolgen kann.

Die Lösung der sich auf die Einrichtung beziehenden Aufgabe wird durch die im Anspruch 4 angegebenen Merkmale erhalten. Eine besonders vorteilhafte Weiterbildung ist im Anspruch 5 offenbart.

Gemäß Anspruch 4 sind wenigstens zwei der LIN-Slaves identisch ausgebildet, wobei jeder der identischen LIN-Slaves über jeweils eine separate Datenleitung mit dem LIN-Master verbunden ist. Dadurch ist es möglich, die Daten zwischen dem LIN-Master und den identischen LIN-Slaves ohne die Verwendung einer jedem LIN-Slave zugeordneten Kennung zu übermitteln. Eine zusätzliche fehleranfällige Beschaltung ist somit nicht erforderlich. Zudem kommt das System auch ohne Verkabelung und Anlernprozesse aus, so dass der Serviceaufwand entsprechend niedriger ist. Außerdem wird dadurch erreicht, dass die Buslast im gesamten Netzwerk gegenüber einer Kommunikation auf nur einer Datenleitung reduziert wird und somit eine häufigere bzw. höherfrequente Kommunikation mit angeschlossenen Slaves erfolgen kann..

Besonders vorteilhaft ist es, wenn mehrere identische, in einem Fahrzeug verwendete Generatoren als identische LIN-Slaves angesteuert werden, da keinerlei Maßnahmen zur Identifizierung der erhaltenen Steuerinformationen in den LIN-Slaves notwendig sind.

Ferner beansprucht die Erfindung ein Fahrzeug, insbesondere ein Nutzfahrzeug, mit einer erfindungsgemäßen Einrichtung.

Die Erfindung wird nachfolgend anhand eines in der Zeichnung dargestellten Ausführungsbeispiels näher erläutert.

Die einzige Figur zeigt ein Blockschaltbild einer Einrichtung zur Datenkommunikation in einem seriellen LIN-Datenbussystem.

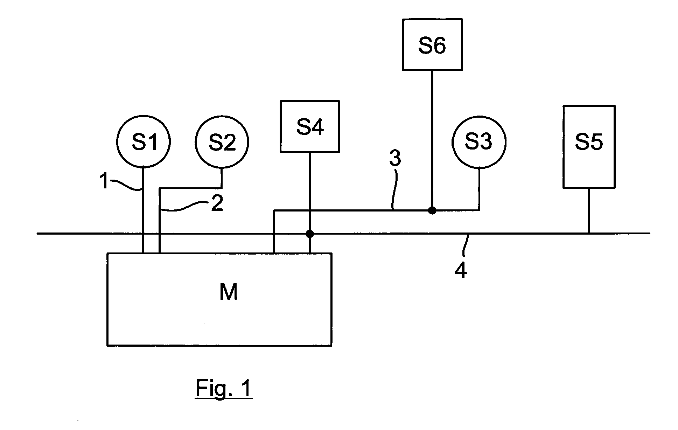

Das in Figur 1 dargestellte Blockschaltbild umfasst einen LIN-Master M, der zur Datenkommunikation mit mehreren LIN-Slaves S1 bis S6 in Datenverbindung steht. Insgesamt drei der LIN-Slaves sind als identische LIN-Slaves S1 bis S3 ausgebildet, die beispielsweise als drei identische Generatoren in einem Fahrzeug angeordnet sind. Die beiden anderen LIN-Slaves S4 und S5 sind unterschiedlich aufgebaute Einrichtungen, die an einen allgemeinen LIN-Datenbus 4 angeschlossen sind. Dagegen sind die identischen LIN-Slaves S1 bis S3 über jeweils eine zugeordnete separate Datenleitung 1; 2; 3 mit dem LIN-Master M verbunden.

An den separaten Datenleitungen 1 bis 3 können auch nichtidentische LIN-Slaves angeschlossen sein, wie dies mit dem LIN-Slave S6 an der Datenleitung 3 angedeutet ist.

Die relevanten Informationen, die von und zu den einzelnen LIN-Slaves übertragen werden, unterliegen einem genormten LIN-Protokoll. Dagegen sind die im Master M ablaufenden Programmfunktionen davon weitgehend unabhängig. Dadurch ist es möglich, dass der Master M Informationen gezielt einer separaten LIN-Datenleitung, zum Beispiel der Datenleitung 3, zuweisen bzw. empfangen kann.

## Patentansprüche

1. Verfahren zur Datenkommunikation in einem seriellen LIN-Bussystem, mit dem LIN-Informationen zwischen einem LIN-Master (M) und LIN-Slaves (S1 - S6) übertragen werden, **dadurch gekennzeichnet, dass** LIN-Informationen zwischen dem LIN-Master (M) und identischen LIN-Slaves (S1 - S3) über jeweils eine separate Datenleitung (1 - 3), die zwischen jeweils einem der identischen LIN-Slaves (S1 - S3) und dem LIN-Master (M) verläuft, übertragen werden.

2. Verfahren nach Anspruch 1, **dadurch gekennzeichnet, dass** im LIN-Master (M) festgestellt wird, welche LIN-Informationen welchen der identischen LIN-Slaves (S1 - S3) über eine zugeordnete Datenleitung (1 - 3) zu übermitteln ist.

3. Verfahren nach einem der vorhergehenden Ansprüche, **dadurch gekennzeichnet, dass** über die den identischen LIN-Slaves zugeordneten separaten Datenleitungen (1 - 3) auch LIN-Informationen zu nichtidentischen LIN-Slaves (S6) übertragen werden.

4. Einrichtung zur Durchführung eines Verfahrens zur Datenkommunikation nach einem der vorhergehenden Ansprüche, die ein serielles LIN-Bussystem mit einem LIN-Master (M) und zwei oder mehreren LIN-Slaves (S1 - S6) umfasst, **dadurch gekennzeichnet, dass** wenigstens zwei der LIN-Slaves (S1 - S6) identisch ausgebildet sind, und dass jeder der identischen LIN-Slaves (S1 - S3) über jeweils eine separate Datenleitung (1 - 3) mit dem LIN-Master (M) verbunden ist.

5. Fahrzeug, insbesondere Kraft- und/oder Nutzfahrzeug, mit einer Einrichtung nach Anspruch 4.
